(19) Europäisches Patentamt
European Patent Office
Office européen des brevets

(11) **EP 2 033 789 A2**

(12) **EUROPÄISCHE PATENTANMELDUNG**

(43) Veröffentlichungstag:
**11.03.2009 Patentblatt 2009/11**

(51) Int Cl.:
**B41F 33/00** *(2006.01)*

(21) Anmeldenummer: **08105081.7**

(22) Anmeldetag: **20.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **10.09.2007 DE 102007043103**

(71) Anmelder: **Heidelberger Druckmaschinen Aktiengesellschaft**
**69115 Heidelberg (DE)**

(72) Erfinder:
• **Berti, Christopher**
  **69234, Dielheim (DE)**
• **Dr. Huber, Werner**
  **69168, Wiesoch (DE)**
• **Schneider, Manfred**
  **74906, Bad Rappenau (DE)**

(54) **Kalibrierung von Farbmessgeräten in einer Druckmaschine**

(57) Die Erfindung betrifft ein Verfahren zur Farbmessung auf Bedruckstoffen (14) in Druckmaschinen (1) mit wenigstens einem farblich eher ungenau messenden Farbmessgerät (7) und einem farblich exakt messenden Farbmessgerät (8). Die Erfindung zeichnet sich dadurch aus, dass das farblich ungenau messenden Farbmessgerät (7) und das farblich exakt messenden Farbmessgerät (8) über eine Kommunikationsverbindung (18) Daten austauschen und dass mittels der Daten des farblich exakt messenden Farbmessgerät (8) eine Kalibrierung des farblich ungenau messenden Farbmessgeräts (7) vorgenommen wird.

**EP 2 033 789 A2**

**Beschreibung**

Die vorliegende Erfindung betrifft ein Verfahren zur Farbmessung auf Bedruckstoffen in Druckmaschinen mit wenigstens einem farblich eher ungenau messenden Farbmessgerät und einem farblich exakt messenden Farbmessgerät.

Zur Überprüfung der Druckqualität von produzierten Bedruckstoffen ist es üblich, diese mittels eines Farbmessgeräts zu erfassen. Dazu können die Bedruckstoffe entweder innerhalb der Druckmaschine oder außerhalb der Druckmaschine vermessen werden. Die ermittelten Messwerte können dann mit den Messwerten einer Druckvorlage verglichen werden und so auf etwaige Abweichungen überprüft werden. Diese Überprüfung kann mittels eines Rechners vorgenommen werden. Sollten die Abweichungen außerhalb einer zulässigen Toleranz liegen, so müssen die Einstellungen der Druckmaschine geändert werden, so dass die Abweichungen minimiert werden. Insbesondere ist die Überprüfung der Farbwiedergabe wichtig, welche durch Farbmessgeräte durchgeführt wird. Für die Farbmessung sind grundsätzlich zwei Messverfahren bekannt, die farbmetrische Messung und die densitometrische Messung. Für beide Verfahren ist es wichtig, dass das Farbmessgerät farblich exakt misst, um Farbabweichungen exakt feststellen zu können.

Aus der EP 0 357 986 A2 ist eine Vorrichtung zur Farbmessung bekannt, welche einen Dreifarben-Simultanmesskopf für eine densitometrische Messung und einen weiteren Dreifarben-Simultanmesskopf für eine farbmetrische Messung aufweist. Alternativ kann auch ein gemeinsamer Simultanmesskopf eingesetzt werden, welcher sechs optoelektronische Wandler umfasst, deren Strahlengängen je drei Farbfilter für die densitometrische und für die farbmetrische Messung angeordnet sind. Die unterschiedlich messenden Farbmesssysteme dienen dabei ausschließlich der exakten farblichen Messung. Der Nachteil dieser farblich exakt messenden Systeme liegt darin, dass sie meist nur einzelne Punkte auf dem Bedruckstoff erfassen können und dass der Messvorgang dementsprechend lange andauert. Bei Farbmessgeräten außerhalb der Druckmaschine bedeutet dies immerhin einen erheblichen Zeitaufwand, während es bei Farbmessgeräten in der Druckmaschine eine komplette Erfassung des Druckbildes sogar unmöglich macht, da die Bedruckstoffe in der Druckmaschine sehr schnell am Farbmessgerät vorbei transportiert werden und folglich nur eine kurze Zeitspanne für die Farbmessung zur Verfügung steht.

Es ist daher Aufgabe der vorliegenden Erfindung, ein Verfahren zur Farbmessung auf Bedruckstoffen in einer Druckmaschine zu schaffen, welches eine möglichst exakte Farberfassung des gesamten Druckbildes während des Transports durch die Druckmaschine ermöglicht.

Die Aufgabe wird erfindungsgemäß durch Patentanspruch 1 gelöst, vorteilhafte Ausgestaltungen der Erfindung sind den Unteransprüchen und den Zeichnungen zu entnehmen. Gemäß der vorliegenden Erfindung weist die Druckmaschine ein farblich eher ungenau messendes Farbmessgerät auf, welches jedoch in der Lage ist, zumindest einen Großteil des Druckbildes auf einem Bedruckstoff zu erfassen. Bei Bogenoffsetdruckmaschinen wird aber zweckmäßiger Weise der gesamte Bogen von einem farblich ungenau messenden Farbmessgerät erfasst. Dazu braucht das farblich ungenau messende Farbmessgerät eine entsprechend ausreichend hohe geometrische Auflösung, um den gesamten Bogen bzw. das gesamte Druckbild erfassen zu können. Da mit dem farblich eher ungenau messenden Farbmessgerät jedoch keine exakten Farbmessungen im Druckbild möglich sind, wird ein zweites farblich exakt messendes Farbmessgerät eingesetzt, welches mit dem ersten farblich ungenau messenden Farbmessgerät über eine Kommunikationsverbindung Daten austauschen kann. Über diese Kommunikationsverbindung ist es möglich, mit dem farblich exakt messenden Farbgerät das farblich ungenau messende Farbmessgerät zu kalibrieren. Dazu müssen mit beiden Farbmessgeräten Bedruckstoffe mit dem gleichen Druckbild vermessen werden, wobei die so mit dem farblich exakt messenden Farbmessgerät gewonnen Farbmesswerte an das farblich ungenau messende Farbmessgerät übertragen werden und so eine Kalibrierung durchgeführt wird. Diese Kalibrierungsvorgänge können während des Druckbetriebs in fest vorgegebenen zeitlichen Intervallen vorgenommen werden, es kann aber auch ausreichen, bei jedem Druckauftrag die Kalibrierung nur einmal durchzuführen. Als farblich exakt messendes Farbmessgerät eignet sich ein Spektralfarbmesskopf, welcher innerhalb oder außerhalb der Druckmaschine angeordnet sein kann. Die Anordnung innerhalb der Druckmaschine hat den Vorteil, dass der farblich exakt messende Farbmesskopf exakt den gleichen Bedruckstoff vermessen kann, den gerade auch das in der Druckmaschine angeordnete farblich ungenau messende Farbmessgerät erfaßt hat. Aufgrund der Langsamkeit und der geringen geometrischen Auflösung des farblich exakt messenden Farbmessgeräts kann jedoch nur eine punktförmige Messung an wenigen Stellen des Druckbildes vorgenommen werden, so dass nur wenige Vergleichsfarbwerte für beide Messgeräte vorliegen. Wenn sich das farblich exakt messende Farbmessgerät außerhalb der Druckmaschine befindet, so lassen sich aufgrund des fehlenden Zeitdrucks viel mehr Punkte auf dem Bedruckstoff vermessen und so entsprechend mehr Vergleichswerte schaffen. Dafür geht dann die unmittelbare Korrelation der beiden Farbmessungen verloren, da der gerade in der Druckmaschine vermessene Bedruckstoff nicht identisch ist mit dem außerhalb der Druckmaschine vermessenden Bedruckstoff. Eine solche Korrelation kann jedoch durch Numerierung der Bedruckstoffe und Speicherung der Farbmesswerte des in der Druckmaschine angeordneten farblich ungenau messenden Farbmessgeräts wieder hergestellt werden. Anstelle des Spektralmesskopfs ist auch der Einsatz eines Spektralscanners möglich, dies ist ein farblich exakt messender Scanner, welcher allerdings wesentlich teurer als ein normaler Scanner ist, dafür den Vorteil bietet, dass er eine wesentlich größere Fläche auf dem Bedruckstoff gleichzeitig farblich exakt erfassen kann und sich daher besser zur Erfassung der Bedruckstoffe in der Druckmaschine eignet.

Für das farblich ungenau messende Farbmessgerät kommt entweder eine RGB Kamera oder ein Scanner zum Einsatz, welche jeweils über eine entsprechend große geometrische Auflösung verfügen, um so das gesamte Druckbild auf dem Bedruckstoff erfassen zu können. Unter farblich ungenau messend ist vor allem ein Farbmessgerät zu verstehen, welches Farbmesswerte absolut nicht exakt messen kann und welches deshalb insbesondere bei sich verändernden Betriebsbedingungen wie Temperatur, Luftfeuchtigkeit, Farbe und Bedruckstoff keine exakten absoluten Farbmesswerte liefern kann. Die relative Farbmessung funktioniert dagegen sehr gut, so dass exakte relative Farbmesswerte erzeugt werden, welche nach einer Kalibrierung mittels der vom farblich exakt absolut messenden Farbmessgeräts gelieferten absoluten Farbmesswerte zur Erkennung von auch nur geringen Farbabweichungen von Sollwerten einer Druckvorlage geeignet sind. Das absolut messende Farbmessgerät liefert also den fehlenden exakten absoluten Bezugspunkt an das relativ messende Farbmessgerät.

In einer besonders vorteilhaften Ausgestaltung der Erfindung ist vorgesehen, dass das farblich exakt messende Farbmessgerät an eine Druckvorstufe angeschlossen ist und dass die auszumessenden punktförmigen Messorte auf dem Bedruckstoff aus der Druckvorstufe an das farblich exakt messende Farbmessgerät übertragen werden. Auf diese Art und Weise muss das Bedienpersonal die Messpunkte für das farblich exakt messende Farbgerät nicht selbst wählen und in die Steuerung des Messgeräts eingeben, sondern die Messorte werden direkt aus der Druckvorstufe an das exakt messende Farbmessgerät übertragen. Insbesondere bei einer relativ großen Anzahl von Messpunkten bedeutet diese automatische Übertragung eine wesentliche Bedienungserleichterung. Die Auswahl der Messpunkte in der Druckvorstufe kann durch eine Analyse mittels Computer automatisch geschehen, wobei bei dieser Analyse insbesondere farblich kritische Messorte auf dem Bedruckstoff ermittelt werden bei denen eine Farbabweichung besonders optisch ins Gewicht fällt. Die Messpunkte können dabei im Druckbild angeordnet sein oder in einem seitlich vorhandenen Farbmessstreifen.

In einer weiteren Ausgestaltung der Erfindung ist vorgesehen, dass das farblich ungenau messende Farbmessgerät in der Druckmaschine angeordnet ist und die Bedruckstoffe permanent erfasst. Bei dieser Ausführungsform wird jedes Druckbild, welches in der Druckmaschine auf einen Bedruckstoff aufgebracht wird, vom farblich ungenau messenden Farbmessgerät erfasst. Somit können die farblichen Abweichungen jedes Bedruckstoffs zuverlässig erfasst und erkannt werden. Im Gegensatz zu einer Erfassung in Intervallen ist es somit möglich, auch Ausreißer zu erfassen und zu bewerten. Bei dem farblich exakt messenden Farbmessgerät brauchen die Bedruckstoffe jedoch nur in zeitlichen Intervallen erfasst zu werden. Da das farblich exakt messende Farbmessgerät im Wesentlichen nur der Kalibrierung des ungenau messenden Farbmessgeräts dient und nicht der Farbregelung, reicht hier eine Farbmessung in zeitlichen Intervallen aus. Dazu reicht es aus, ab und an einen fertig produzierten Bedruckstoff mit dem farblich exakt messende Farbmessgerät zu vermessen und dann eine Kalibrierung mit dem farblich ungenau messenden Farbmessgerät in der Druckmaschine durchzuführen.

Vorteilhafterweise ist vorgesehen, dass das farblich exakt messende Farbmessgerät punktförmige Messorte erfasst und dass die punktförmigen Messorte von einem Rechner unter Analyse des von dem farblich ungenau messenden Farbmessgerät erfassten gesamten Druckbogens ausgewählt werden. Diese Ausgestaltung der Erfindung eignet sich insbesondere für die Fälle, in denen die Farbmessgeräte nicht unmittelbar mit der Druckvorstufe kommunizieren können. In diesem Fall findet zu Beginn eines neuen Druckauftrags die Auswahl der punktförmigen Messorte für das farblich exakt messende Farbmessgerät auf Grundlage des von dem farblich ungenau messenden Farbmessgerät erfassten Druckbildes statt. Zuvor muss das ungenau messende Farbmessgerät durch das exakt messende Farbmessgerät kalibriert werden. Das von dem farblich ungenau messenden Farbmessgerät erfasste Druckbild wird in einem Rechner analysiert, wobei insbesondere kritische Farbwerte erfasst werden. Diese kritischen Farbmesswerte werden dann als punktförmige Messorte ausgewählt, so dass das farblich exakt messende Farbmessgerät genau diese kritischen punktförmigen Messorte auf den produzierten Bedruckstoffen ebenfalls vermisst. Damit ist sichergestellt, dass die farblich kritischen Messorte ausgewählt und vermessen werden, auch wenn die Farbmessgeräte nicht an eine Druckvorstufe angebunden sind.

Es ist vorteilhafter Weise vorgesehen, dass bei jedem Druckauftrag eine Kalibrierung des farblich ungenau messenden Farbmessgeräts durch das farblich exakt messende Farbmessgerät durchgeführt wird. Damit wird sichergestellt, dass die Bedruckstoffe eines jeden Druckauftrags in der Druckmaschine durch das farblich ungenau messende Farbmessgerät korrekt vermessen werden. Des Weiteren können die zur Kalibrierung notwendigen Korrekturwerte in einer Datenbank im Rechner abgespeichert werden. Auf die zur Kalibrierung notwendigen Korrekturwerte kann so jederzeit bei der Kalibrierung des ungenau messenden Farbmessgeräts zurückgegriffen werden. Insbesondere kann so die Kalibrierung bei schon bekannten Farbe-Papierkombinationen bei einem erneuten Druckauftrag schneller durchgeführt werden. Durch die Speicherung der Korrekturwerte können auch Kennlinien errechnet und abgelegt werden, mit welchen das farblich ungenau messende Farbmessgerät zuverlässiger kalibriert werden kann. Diese Kennlinien werden dann durch die Kalibrierungsvorgänge bei jedem Druckauftrag verbessert. Mit diesen Kennlinien können außerdem auch während eines Druckauftrags stattfindende Veränderungen im Verhalten des farblich ungenau messenden Farbmessgeräts berücksichtigt werden. Es hat sich herausgestellt, dass insbesondere RGB-Kameras bedingt durch Temperaturänderungen und Wärmeentwicklung während eines Druckauftrags nicht konstant messen. Diese Änderungen können durch mehrfache Kalibriervorgänge während eines Druckauftrags erfasst und in der Datenbank für die Zukunft abgespeichert werden. Die so ermittelten Werte für eine Nachkalibrierung während eines Druckauftrags können in eine Kennlinie umgewandelt werden, so dass bei nachfolgenden Druckaufträgen nur noch eine Kalibrierung während des laufenden Druckauftrags notwendig ist, wohingegen die während des Druckvorgangs auftretenden Abweichungen des farblich ungenau messenden Farbmessgeräts durch die gespeicherten und ständig aktualisierten Kennlinien ausgeglichen werden können.

Vorteilhafterweise ist außerdem vorgesehen, dass aus den Kalibrierdaten der Datenbank ein Trend ermittelt und der Trend bei zukünftigen Kalibriervorgängen berücksichtigt wird. So kann aus den Kalibrierdaten in der Datenbank ermittelt werden, bei welchen Bedruckstoffen und Farbkombinationen die Abweichungen des farblich ungenau messenden Farbmessgeräts während eines Druckvorgangs in welchem Umfang auftreten. So lässt sich zum Beispiel eine Bildveränderung der Kamera bei kartonartigen Bedruckstoffen bedingt durch ein Abheben der Bogenhinterkante während des Messvorgangs durch das farblich ungenau messende Farbmessgerät erkennen und so bei zukünftigen Druckaufträgen, welche Karton verarbeiten, entsprechend berücksichtigen. Auch andere Trends können so in entsprechende Kennlinien für das farblich ungenau messende Farbmessgerät umgesetzt werden. Auf diese Art und Weise füllt sich die Datenbank über alle Druckaufträge hinweg mit entsprechenden Daten, so dass mit zunehmendem Datenbestand ein Kalibrierungsvorgang pro Druckauftrag ausreicht, um die auftragsspezifischen Abweichungen bzw. zeitlichen Abweichungen während eines Druckauftrags bedingt durch die Eigenschaften des farblich ungenau messenden Farbmessgeräts durch die Kennlinien des farblich genau messenden Farbmessgeräts zu kompensieren.

Die vorliegende Erfindung wird nachfolgend anhand einer Figur näher beschrieben und erläutert. Es zeigt:

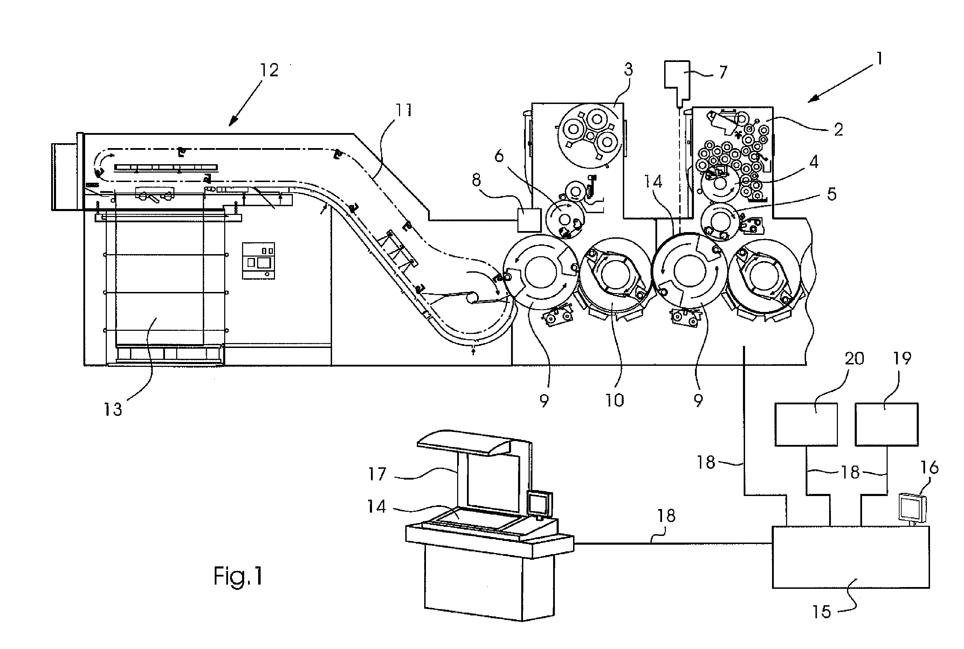

Figur 1    Eine Bogenoffsetdruckmaschine mit einem farblich ungenau messenden Farbmessgerät in der Druckmaschine und zwei farblich exakt messenden Farbmessgeräten außerhalb der Druckmaschine,

Figur 2    eine Grafik zu einem ersten Kalibrierverfahren und

Figur 3    Beispiele von Spektralwertfunktionen zu einem zweiten Kalibrierverfahren.

In der Figur ist eine Bogendruckmaschine 1 ausschnittsweise dargestellt, wobei auf die Darstellung des Anlegers und der ersten Druckwerke verzichtet wurde. Da eine exakte farbliche Auswertung nur auf Bedruckstoffen 14 möglich ist, auf denen alle Farbauszüge übereinander gedruckt sind, befindet sich das farblich ungenau messende Farbmessgerät 7 in der Druckmaschine zweckmäßigerweise nach dem letzten Druckwerk 2. Die Druckmaschine 1 in der Figur weist nach dem letzten Druckwerk 2 mit einer Kamera 7 als farblich ungenau messendem Farbmessgerät außerdem ein Lakkierwerk 3 auf. In diesem Lackierwerk 3 ist ausgangsseitig ein Spektralmesskopf 8 angeordnet, welcher in der Lage ist, die bedruckten Bogen 14 farblich absolut exakt zu erfassen. Da die Bogen 14 mit hoher Geschwindigkeit durch die Druckmaschine 1 befördert werden, kann das Spektralmessgerät 8 jedoch nur wenige Punkte auf dem Bogen 14 erfassen. Für die Erfassung vieler Messpunkte sind außerhalb der Druckmaschine 1 ein Handfarbmessgerät 19 und ein externes stationäres Farbmessgerät 17 vorgesehen. Die beiden Farbmessgeräte 17, 19 arbeiten wie der Spektralmesskopf 8 farblich absolut exakt und können bei entsprechendem Zeitaufwand beliebig viele Messpunkte auf dem Druckbogen 14 erfassen, da hier der Druckbogen 14 still liegt.

Die Druckwerke 2 der Druckmaschine 1 sind grundsätzlich gleichartig aufgebaut und weisen einen Plattenzylinder 4 und einen Gummituchzylinder 5 auf. Zwischen Gummituchzylinder 5 und Gegendruckzylinder 9 werden die Bogen 14 bedruckt.

Zwischen den Druckwerken 2 und dem Lackierwerk 3 werden die Bogen 14 über Transportzylinder 10 transportiert. Das Lackierwerk 3 besteht aus einem Lackzylinder 6, welcher ebenfalls mit einem Gegendruckzylinder 9 zusammenarbeitet. Mit diesem Lackzylinder 6 werden die mit allen Farbauszügen versehenen Bogen 14 mit einer Lackschicht bedeckt. Ausgangs des Lakkierwerks 3 werden die fertig produzierten Bedruckstoffe 14 im Ausleger 12 mittels einer Auslegertransportkette 11 zum Auslegerstapel 13 transportiert und dort abgelegt. Die fertig produzierten Bogen 14 kann das Bedienpersonal in zeitlichen Abständen vorzugsweise wenigstens einmal pro Druckauftrag dem Auslegerstapel 13 entnehmen und auf dem externen stationären Farbmessgerät 17 oder mittels des Handfarbmessgeräts 19 farblich exakt vermessen. Die Farbmessgeräte 17, 19 sowie die in der Druckmaschine 1 angeordneten Farbmessgeräte 7, 8 sind über Kommunikationsverbindungen 18 mit einem Steuerungsrechner 15 der Druckmaschine 1 verbunden. Auf diese Art und Weise können die Farbmessgeräte alle miteinander kommunizieren. Der Steuerungsrechner 15 weist einen Bildschirm 16 auf, mit dem das Bedienpersonal die Druckmaschine 1 und die Farbmessgeräte 7, 8, 17, 19 steuern kann. So können über den Bildschirm 16 einzelne Messpunkte für das externe Farbmessgerät 17 ausgewählt werden, welches diese dann selbsttätig anfährt. Des Weiteren ist der Steuerungsrechner 15 an eine schematisch gezeichnete Druckvorstufe 20 angeschlossen. Auf diese Art und Weise hat der Steuerungsrechner 15 unmittelbaren Zugriff auf die digitalen Daten der originalen Druckvorlage und kann so die Messwerte der Farbmessgeräte 7, 8, 17, 19 mit den digitalen Daten der Druckvorlage aus der Druckvorstufe 20 vergleichen. Wenn die festgestellten Abweichungen außerhalb der zulässigen Toleranz stehen, so kann der Steuerungsrechner 15 am Bildschirm 16 ein entsprechendes Signal anzeigen. Der Drucker hat dann die Möglichkeit, die Einstellungen an der Druckmaschine 1 entsprechend zu ändern, und die Abweichungen zu minimieren. Es ist aber auch möglich, dass der Steuerungsrechner 15 diese Einstellung selbst berechnet und dem Drucker vorschlägt. Nach einer Quittierung durch den Drucker oder auch selbsttätig werden dann die entsprechenden Einstellungen in der Druckmaschine 1 vorgenommen, um die Abweichung zu minimieren.

Da die Kamera 7 in der Druckmaschine farblich nicht exakt messen kann, muss diese bei jedem Druckauftrag wenigstens einmal durch eines der farblich exakt messenden Farbmessgeräte 8, 17, 19 kalibriert werden. Als ein farblich ungenau messendes Farbmessgerät wird wie eingangs bereits erwähnt ein Farbmessgerät angesehen, welches Farbmesswerte insbesondere absolut nicht exakt messen kann. Relative Farbmesswertunterschiede zwischen einzelnen Bogen 14, welche unter der Kamera 7 durchlaufen, können jedoch mit hinreichender Exaktheit erfasst werden, so dass Veränderungen während eines Druckauftrags durch die Kamera 7 zuverlässig erfasst werden können. Dabei ist jedoch zu beachten, dass die Kamera 7 während eines Druckauftrags bedingt durch Temperaturabweichungen Messungenauigkeiten aufweist. Diese Messungenauigkeiten können jedoch durch entsprechende Kennlinien im Steuerungsrechner 15 berücksichtigt werden, welche ständig durch die Korrekturwerte während der Kalibrierungsvorgänge aktualisiert werden. So ist sichergestellt, dass die Messwerte der Kamera 7 während eines Druckvorgangs vergleichbar sind. Während mit der Kamera 7 das komplette Druckbild auf dem Druckbogen 14 vermessen werden kann, können die farblich exakt messenden Farbmessgeräte 8, 17, 19 nur einzelne Messpunkte auf dem Druckbogen 14 erfassen. Dies spielt jedoch bei den außerhalb der Druckmaschinen angeordneten Messgeräten 17, 19 keine Rolle, da hier der Druckbogen 14 entsprechend lange auf oder unter dem Farbmessgerät verweilen kann. Auf diese Art und Weise ist es möglich, die schnell durch die Druckmaschine transportierten Bogen 14 durch die Kamera 7 permanent zu überwachen, wobei die Kamera 7 das gesamte Druckbild überwachen und trotzdem mittels des externen Farbmessgeräts 17 und des Handfarbmessgeräts 19 farblich exakte Messungen auf dem Bogen 14 durchführen kann. Damit werden die Vorteile der Kamera 7 und die Vorteile der farblich exakt messenden Farbmessgeräte 8, 17, 19 miteinander kombiniert.

Nachfolgend werden noch zwei Kalibrierungsverfahren beschrieben, mit denen das farblich nicht absolut messende Messgerät 7 mittels der exakt messenden Messgeräte 8, 17, 19 kalibriert werden kann.

Unter Kalibrierung versteht man den Zusammenhang der Farbwerte der Kamera 7 (RGB) mit den Farbwerten des Spektrometers 8 (Lab). Mathematisch gesehen ist es die Abbildung der Farbräume RGB und Lab aufeinander. Kompliziert wird das dadurch, dass diese Abbildung sicher nicht durch eine Abbildungsvorschrift allgemeingültig gegeben werden kann. Die Beschränkung auf die Färbungslinien der Primärfarben ändert daran nichts grundsätzlich. Eine Färbungslinie ist die Menge aller Farborte, die bei kontinuierlicher Schichtdickenänderung im Farbraum entsteht.

Eine empirische Lösung kann abhängen von:

- dem absoluten Farbort und damit der Färbungslinie bzw. der Schichtdicke oder Sättigung der Primärfarbe

- der Geometrie der Beleuchtungs- und Beobachtungsbedingungen, d.h. der tatsächlichen Lage des Messfelds auf dem Bogen 14 relativ zur Kamera 7

- Kameraparametern, wie z.B. Gain eines Kanals, spektrale Bewertungsfunktion eines Kanals oder die Belichtungszeit

- dem Papier, falls dies nicht durch Normierung eliminiert werden kann

Es gilt zwar:

$$Lab = Lab(\beta)$$

Aber auch:

$$RGB = RGB(\beta, \alpha, \beta_{Papier}, P,..)$$

Dabei ist $\beta$ das Spektrum der Primärfarbe bei gegebener Schichtdicke, $\alpha$ der Beobachtungswinkel der Messung bezogen auf die optische Achse der Kamera, P diverse nicht unbedingt bekannte Kameraparameter.

Gesucht wird:

$$Lab = RGB(\beta, \alpha, \beta_{Papier}, P,..)$$

1. Kalibrierverfahren: Zwei Färbungsniveaus

Die genannte Zuordnung muss im schlimmsten Fall bei jedem Auftrag neu gelernt werden. Dies muss dynamisch erfolgen, z.B. bei zwei hinreichend unterschiedlichen Färbungsniveaus. Solch eine Szene ergibt sich fast zwangsläufig beim Einrichten der Druckmaschine 1, wo allein schon aufgrund des Farbeinlaufes die Färbung nicht konstant ist. Es wird dann angenommen, dass die relativen Färbungsdifferenzen am Arbeitspunkt konstant sind.

$$\frac{dE}{dRGB} = const$$

*dRGB* ist die Färbungsdifferenz im RGB-Raum. Die Konstante *const* gilt im Allgemeinen nur für dieses Messfeld auf dem Bogen 14 und damit diese Geometrie und Färbung.

Damit kann am Arbeitspunkt die Färbung mindestens überwacht werden, und in einer Erweiterung zur Farbmessung auch mit bekannten Sensitivitäten σ die Färbung selbst geregelt werden.

$$\sigma = \frac{dLab}{ds}$$

ist die Definition der Sensitivität. Sie gibt an, wie sehr sich der Farbort mit der Schichtdicke *s* ändert. Gebräuchlich ist auch der Kehrwert der Sensitivität

$$\sigma^{-1} = \frac{dF}{dE} := \frac{ds}{dLab}$$

mit *dF* als prozentualer Schichtdickenänderung.
Farbe stellen geht dann mittels

$$\Delta F = \sigma^{-1} \cdot \Delta E$$

Das Verhältnis der Metriken dE und dRGB ist notwendig, um die Kamera 7 am jeweiligen Arbeitspunkt der Färbung auf das objektive Maß dE beziehen zu können:

$$\Delta E \approx \frac{dE}{dRGB} \cdot \Delta RGB$$

Damit kann der Kamera 7 die Aufgabe übertragen werden, die Färbung relativ im Farbraum des Spektrometers zu überwachen (zu Deutsch: farbmetrisch) mit den bekannten Vorteilen, welche eine Kamera bietet.
Es sei:

$$\mu := \frac{dE}{dRGB}$$

Die einfachste und sicherste, allerdings auch langsamste und aufwändigste Methode μ als das Verhältnis der Metriken dE und dRGB zu bestimmen, ist, an zwei Färbungsniveaus die Farbwerte Lab und RGB zu messen.
Dann gilt:

$$\frac{dE}{dRGB} \approx \frac{\left(\Delta L^2 + \Delta a^2 + \Delta b^2\right)^{1/2}}{\left(\Delta R^2 + \Delta G^2 + \Delta B^2\right)^{1/2}}$$

mit

$$\Delta L = L_1 - L_2 \text{ etc.}$$

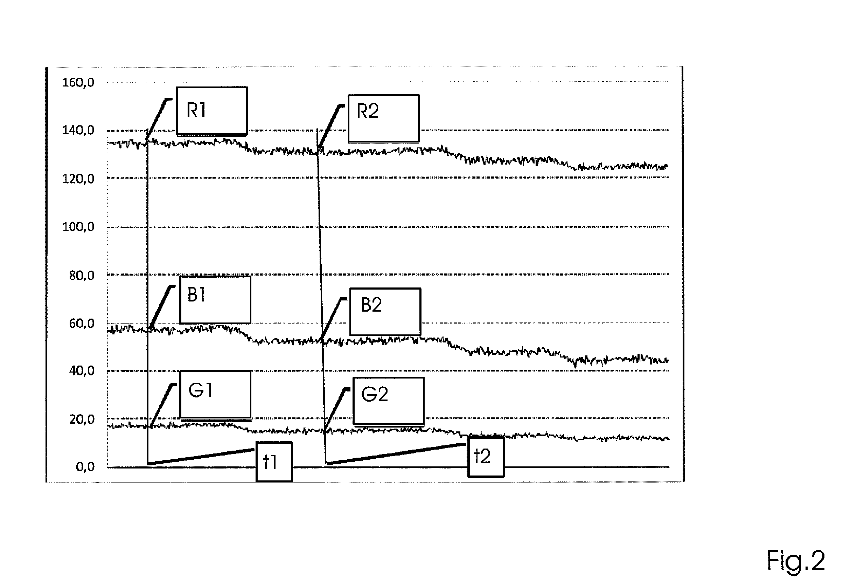

Der Index ist das jeweilige Färbungsniveau.
Die Grafik in Fig. 2 zeigt das Vorgehen:

zu einem Zeitpunkt t1 werden die Farbwerte R1,G1,B1 gemessen und simultan dazu (hier nicht dargestellt) L1,a1,b1. Dasselbe geschieht zum Zeitpunkt t2. Damit kann dann dRGB und dE berechnet werden. Die Kamera 7 weiß damit für diese Position und Färbung den Zusammenhang der Metriken der beiden Farbräumenn RGB bzw. Lab.

2. Kalibrierverfahren: Ein Färbungsniveau und ein Modell

Es ist vorteilhaft, wenn durch einmaliges, spektrales Messen einer Vollfläche das Verhältnis der Metriken dE bzw. dRGB der Farbräume Lab bzw. RGB bestimmt werden kann. Dann muss das aufwändigere differentielle Verfahren nicht angewendet werden, bei dem durch Differenzbildung zweier Messungen bei unterschiedlichen Färbungen der Quotient dE/dRGB errechnet wird.
Zugrunde liegen die Spektralwertfunktionen $\hat{R}$, $\hat{G}$, $\hat{B}$ der Kamera 7. Angewendet auf ein Spektrum β können damit die Farbwerte R, G, B berechnet werden:

$$R = \frac{\sum \hat{R}\beta}{\sum \hat{R}} \text{ etc.}$$

Mit einem Farbmodell, welches den Zusammenhang zwischen Spektrum und (relativer) Farbschichtdicke abbildet, kann bei spektraler Messung ein zweites Färbungsniveau gerechnet werden, z.B. $\beta(s = 1{,}01) \leftarrow \beta(s = 1{,}00)$ mit $s$ als Schichtdicke, und aus dem Differentialquotient schließlich dE/dRGB:

$$\frac{dE}{dRGB} \approx \frac{\left(\Delta L^2 + \Delta a^2 + \Delta b^2\right)^{1/2}}{\left(\Delta R^2 + \Delta G^2 + \Delta B^2\right)^{1/2}}$$

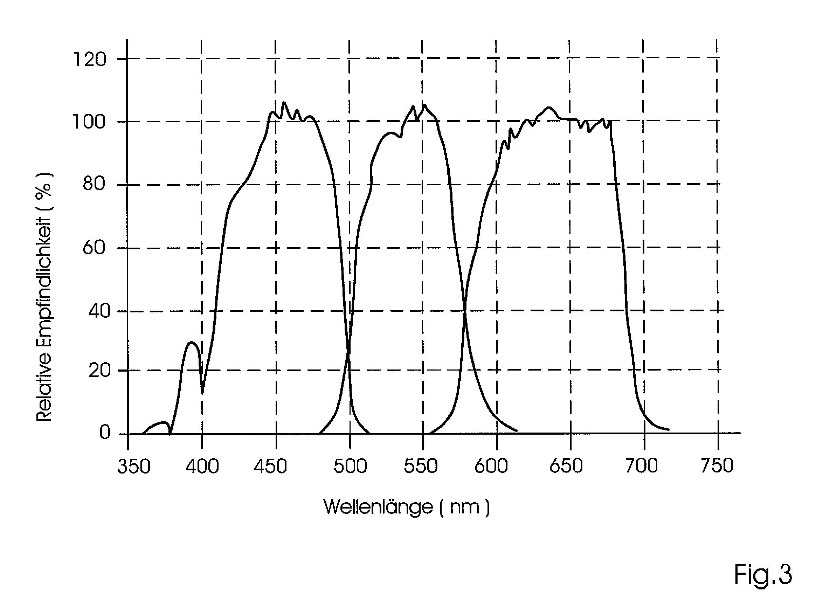

Die Spektralwertfunktionen $\hat{R}$, $\hat{G}$, $\hat{B}$ sind z.B. laut Herstellerangaben von Xiimus-Kameras in Figur 3 abgebildet. Natürlich können diese Werte, egal wie sie ermittelt wurden, in Tabellenform abgelegt werden zur weitere wiederholten Verwendung. Der zu RGB parallele Farbraum ist natürlich vorteilhaft Lab (also farbmetrisch) aber nicht notwendiger weise darauf beschränkt. Wichtig ist nur die Kenntnis der spektralen Bewertungsfunktionen dieses alternativen Farbraum. Ein solcher Spezialfall ist die hinlänglich bekannte Dichte.

**Bezugszeichenliste**

| | |
|---|---|
| 1 | Druckmaschine |
| 2 | Druckwerk |
| 3 | Lackierwerk |
| 4 | Plattenzylinder |
| 5 | Gummituchzylinder |
| 6 | Lackzylinder |
| 7 | Kamera |
| 8 | Spektralmesskopf |
| 9 | Gegendruckzylinder |
| 10 | Transportzylinder |
| 11 | Auslegertransportkette |
| 12 | Ausleger |
| 13 | Auslegerstapel |
| 14 | Bogen |
| 15 | Steuerungsrechner |
| 16 | Bildschirm |
| 17 | Externes Farbmessgerät |
| 18 | Kommunikationsverbindung |
| 19 | Handfarbmessgerät |
| 20 | Druckvorstufe |

**Patentansprüche**

1.  Verfahren zur Farbmessung auf Bedruckstoffen (14) in Druckmaschinen (1) mit wenigstens einem farblich ungenau messenden Farbmessgerät (7) und einem farblich exakt messenden Farbmessgerät (8), **dadurch gekennzeichnet,** **dass** das farblich ungenau messenden Farbmessgerät (7) relative Farbmesswerte liefert und dass das farblich exakt messenden Farbmessgerät (8) absolute Farbmesswerte liefert, dass die beiden Farbmessgeräte (7, 8) über eine Kommunikationsverbindung (18) Daten austauschen und dass mittels der Daten des farblich exakt messenden Farbmessgerät (8) eine Kalibrierung des farblich ungenau messenden Farbmessgeräts (7) vorgenommen wird.

2.  Verfahren nach Anspruch 1, **dadurch gekennzeichnet,** **dass** das farblich exakt messende Farbmessgerät (8) ein Spektralfarbmesskopf oder ein Spektralscanner ist und das farblich ungenau messende Farbmessgerät (7) eine RGB-Kamera oder ein Scanner.

3.  Verfahren nach Anspruch 1 oder 2, **dadurch gekennzeichnet,** **dass** das farblich ungenau messende Farbmessgerät (7) in der Druckmaschine (1) angeordnet ist und Bedruckstoffe (14) in der Druckmaschine (1) erfasst.

4.  Verfahren nach einem der vorhergehenden Ansprüche, **dadurch gekennzeichnet,** **dass** das farblich exakt messende Farbmessgerät (8) in der Druckmaschine (1) angeordnet ist und Bedruckstoffe (14) in der Druckmaschine (1) vermisst.

5.  Verfahren nach einem der Ansprüche 1 bis 4, **dadurch gekennzeichnet,** **dass** das farblich exakt messende Farbmessgerät (8) außerhalb der Druckmaschine (1) angeordnet ist und Bedruckstoffe (14) außerhalb der Druckmaschine (1) erfasst.

6.  Verfahren nach einem der vorhergehenden Ansprüche, **dadurch gekennzeichnet,** **dass** das farblich ungenau messende Farbmessgerät (7) in der Druckmaschine (1) angeordnet ist und die Bedruckstoffe (14) permanent erfasst.

7.  Verfahren nach einem der vorhergehenden Ansprüche, **dadurch gekennzeichnet,** **dass** das farblich ungenau messende Farbmessgerät (7) in einer Bogendruckmaschine (1) angeordnet ist und einen ganzen Druckbogen (14) vermisst.

**8.** Verfahren nach einem der vorhergehenden Ansprüche,

**dadurch gekennzeichnet,**

**dass** das farblich exakt messende Farbmessgerät (8) punktförmige Messorte erfasst und dass die punktförmigen Messorte von einem Rechner (15) unter Analyse des von dem farblich ungenau messenden Farbmessgerät (7) erfassten gesamten Druckbogens (14) ausgewählt werden.

**9.** Verfahren nach einem der vorhergehenden Ansprüche,

**dadurch gekennzeichnet,**

**dass** bei jedem Druckauftrag eine Kalibrierung des farblich ungenau messenden Farbmessgeräts (7) durch das farblich exakt messende Farbmessgerät (8) durchgeführt wird.

**10.** Verfahren nach Anspruch 9,

**dadurch gekennzeichnet,**

**dass** die zur Kalibrierung notwendigen Korrekturwerte in einer Datenbank im Rechner (15) abgespeichert werden.

**11.** Verfahren nach Anspruch 10,

**dadurch gekennzeichnet,**

**dass** bei jedem Kalibriervorgang die Korrekturwerte in der Datenbank im Rechner (15) abgespeichert werden.

**12.** Verfahren nach einem der Ansprüche 10 bis 11,

**dadurch gekennzeichnet,**

**dass** aus den Kalibrierdaten in der Datenbank ein Trend ermittelt und der Trend bei zukünftigen Kalibriervorgängen berücksichtigt wird.

**13.** Verfahren nach einem der Ansprüche 10 bis 12,

**dadurch gekennzeichnet,**

**dass** über die in der Datenbank abgespeicherten Korrekturwerte Kennlinien für das farblich ungenau messende Farbmessgerät (7) erzeugt und abgespeichert werden.

**14.** Verfahren nach einem der Ansprüche 9 bis 13,

**dadurch gekennzeichnet,**

**dass** zur Kalibrierung mit dem farblich exakt messenden Farbmessgerät (8) und dem farblich ungenau messenden Farbmessgerät (7) jeweils zwei Färbungsniveaus auf dem Druckbogen (14) erfasst werden.

**15.** Verfahren nach einem der Ansprüche 9 bis 13,

**dadurch gekennzeichnet,**

**dass** zur Kalibrierung mit dem farblich exakt messenden Farbmessgerät (8) und dem farblich ungenau messenden Farbmessgerät (7) jeweils ein Färbungsniveaus auf dem Druckbogen (14) erfasst wird und zur Berechnung weiterer Farbmesswerte beim farblich exakt messenden Farbmessgerät (8) ein Farbmodell verwendet wird.

Fig.1

Fig.2

Fig.3

EP 2 033 789 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0357986 A2